Europäisches Patentamt

European Patent Office

Office européen des brevets

(19)

(11) **EP 0 643 731 B1**

(12) **EUROPÄISCHE PATENTSCHRIFT**

(45) Veröffentlichungstag und Bekanntmachung des
Hinweises auf die Patenterteilung:
**26.06.1996 Patentblatt 1996/26**

(51) Int Cl.$^6$: **C08F 220/28**, C09D 133/06,
B05D 7/26, C09D 137/00

(21) Anmeldenummer: **93911489.8**

(22) Anmeldetag: **21.04.1993**

(86) Internationale Anmeldenummer:
**PCT/EP93/00967**

(87) Internationale Veröffentlichungsnummer:
**WO 93/23443 (25.11.1993 Gazette 1993/28)**

(54) **WÄSSRIGE LACKE ENTHALTEND ACRYLHARZ MIT EINPOLYMERISIERTEN FURFURYLESTERN**

AQUEOUS LACQUERS CONTAINING ACRYLIC RESIN WITH MONOPOLYMERISED FURFURYL ESTERS

VERNIS AQUEUX CONTENANT UNE RESINE ACRYLIQUE RENFERMANT DES ESTERS DE FURFURYLE MONOPOLYMERISES

(84) Benannte Vertragsstaaten:
**AT BE CH DE DK ES FR GB IT LI NL SE**

(30) Priorität: **12.05.1992 DE 4215499**

(43) Veröffentlichungstag der Anmeldung:
**22.03.1995 Patentblatt 1995/12**

(73) Patentinhaber: **BASF Lacke + Farben AG**
**D-48165 Münster-Hiltrup (DE)**

(72) Erfinder:
• **RINK, Heinz-Peter, Dr.**
**D-48153 Münster (DE)**
• **LETTMANN, Bernhard, Dr.**
**D-48317 Drensreinfurt (DE)**
• **GAST, Achim, Dr.**
**Kamakura 248 (JP)**

(56) Entgegenhaltungen:
**EP-A- 0 357 110**

**Beschreibung**

Die Erfindung betrifft ein Verfahren zur Herstellung eines mehrschichtigen schützenden und/oder dekorativen Überzugs auf einer Substratoberfläche, bei dem

(1) ein pigmentierter wäßriger Basislack, der ein Polyacrylatharz als Bindemittel enthält, auf die Substratoberfläche aufgebracht wird, wobei das Polyacrylatharz erhältlich ist durch Polymerisation von (a) einer Mischung aus Estern der Methacrylsäure und/oder Estern der Acrylsäure, gegebenenfalls zusammen mit (b) weiteren, von (a) verschiedenen Monomeren oder Mischungen aus solchen Monomeren

(2) aus dem in Stufe (1) aufgebrachten Basislack ein Polymerfilm gebildet wird

(3) auf der so erhaltenen Basisschicht ein transparenter Decklack aufgebracht wird und anschließend

(4) Basisschicht und Deckschicht zusammen eingebrannt werden.

Die Erfindung betrifft auch zur Durchführung des oben beschriebenen Verfahrens geeignete wäßrige Lacke.

Das oben beschriebene Verfahren zur Herstellung von mehrschichtigen schützenden und/oder dekorativen Überzügen ist als Basecoat-Clearcoat-Verfahren bekannt und wird vor allem zur Herstellung von Decklackierungen, insbesondere Metalleffektlackierungen auf Automobilkarosserien eingesetzt (vgl. z.B. DE-A-38 41 540, EP-A287 144, DE-A-36 28 124, EP-A-195 931 und EP-A256 540).

Das Ausmaß des Metalleffektes der nach dem in Rede stehenden Verfahren hergestellten mehrschichtigen Überzüge hängt davon ab, wieviele der im Basislack enthaltenen, in Plättchenform vorliegenden Metallpigmentteilchen in der eingebrannten Lackierung in paralleler Ausrichtung zur Substratoberfläche vorliegen. Die Ausrichtung der Metallpigmentteilchen kann insbesondere nach dem Aufbringen des transparenten Decklackes und/oder während des Einbrennvorgangs gestört werden.

Die der vorliegenden Erfindung zugrundeliegende Aufgabenstellung besteht in der Bereitstellung eines Verfahrens der oben beschriebenen Art, mit dem mehrschichtige überzüge erhältlich sind, die gegenüber mehrschichtigen Überzügen des Standes der Technik einen verbesserten Metalleffekt aufweisen. Diese Aufgabe wird überraschenderweise dadurch gelöst, daß im pigmentierten Basislack ein Polyacrylatharz eingesetzt wird, das erhältlich ist, indem als Komponente (a) eine Mischung aus Estern der Methacrylsäure und/oder Estern der Acrylsäure eingesetzt wird, die Furfurylacrylat und/oder Furfurylmethacrylat enthält.

Die erfindungsgemäß eingesetzten Polyacrylatharze können durch Polymerisation von (a) einer Mischung aus Estern der Methacrylsäure und/oder Estern der Acrylsäure gegebenenfalls zusammen mit (b) weiteren, von (a) verschiedenen Monomeren oder Mischungen aus solchen Monomeren hergestellt werden. Dabei ist es erfindungswesentlich, daß als Komponente (a) eine Mischung aus Estern der Methacrylsäure und/oder Estern der Acrylsäure eingesetzt wird, die Furfurylacrylat und/oder Furfurylmethacrylat, vorzugsweise Furfurylmethacrylat enthält. Es ist bevorzugt, daß die Komponente (a) soviel Furfurylacrylat und/oder Furfurylmethacrylat enthält, daß der Anteil an Furfurylacrylat und/oder Furfurylmethacrylat, bezogen auf das Gesamtgewicht von (a) + (b) = 100 Gew.-%, 0,25 bis 10, vorzugsweise 1,0 bis 9,0, besonders bevorzugt 2,0 bis 7,0 Gew.-% beträgt.

Die Polymerisation der Komponenten (a) und (b) kann in einem organischen Lösemittel oder in einem Gemisch aus organischen Lösemitteln durchgeführt werden. Die auf diese Weise erhaltene Lösung des Polyacrylatharzes kann dann durch Zugabe von Wasser in eine wäßrige Dispersion überführt werden. Die erfindungsgemäß eingesetzten Polyacrylatharze können auch durch Polymerisation der Komponenten (a) und (b) in einer wäßrigen Emulsion hergestellt werden. Sowohl die Polymerisation in organischen Lösemitteln als auch die Polymerisation in wäßriger Emulsion wird im allgemeinen radikalisch durchgeführt. Die oben beschriebenen Polymerisationsverfahren sind so gut bekannt, daß sie hier nicht näher erläutert werden müssen.

Um wasserverdünnbare Polyacrylatharze zu erhalten, müssen in der Komponente (a) und/oder (b) Monomere enthalten sein, die hydrophile Gruppen, wie z.B. Carboxylgruppen, Sulfonsäuregruppen oder hydrophile Polyetherketten, wie z.B. $-(CH_2\text{-}CH_2\text{-}O)_nH$, $-(\text{-}CHCH_3\text{-}CH_2\text{-}O)_nH$ oder $-(CH_2\text{-}CH_2\text{-}O)_x(CHCH_3\text{-}CH_2\text{-}O)_yH$, wobei n für eine Zahl von 4 bis 20, x für eine Zahl von 1 bis 19 und y für eine Zahl von 1 bis 19 steht, enthalten. Carboxylgruppenhaltige Polyacrylatharze werden im allgemeinen wenigstens teilweise neutralisiert. Als Neutralisationsmittel werden vorzugsweise tertiäre Amine eingesetzt. Wenn die erfindungsgemäß eingesetzten Polyacrylatharze carboxylgruppenhaltig sind, dann sollten sie eine Säurezahl von 1 bis 80, vorzugsweise 5 bis 50 mg KOH pro g Festharz aufweisen.

Die Komponente (a) kann neben dem erfindungsgemäß eingesetzten Furfurylacrylat und/oder Furfurylmethacrylat noch weitere Ester der Methacrylsäure oder Acrylsäure enthalten, wie z.B. aliphatische und cycloaliphatische Acrylate oder Methacrylate mit bis zu 20 Kohlenstoffatomen im Alkoholrest, wie z.B. Methyl-, Ethyl-, Propyl-, Butyl-, Hexyl-, Ethylhexyl-, Stearyl-, Lauryl- und Cyclohexylacrylat oder -methacrylat und Hydroxyalkylester der Acrylsäure oder Methacrylsäure, wie z. B. 2-Hydroxyethylacrylat, 2-Hydroxypropylacrylat, 3-Hydroxypropylacrylat, 2-Hydroxypropylmethacrylat, 3-Hydroxypropylmethacrylat, 2-Hydroxyethylmethacrylat, 4-Hydroxybutylacrylat, 4-Hydroxybutylmethacrylat usw.

Die Komponente (b) besteht aus Monomeren, die von den in der Komponente (a) enthaltenen Monomeren verschieden sind oder Mischungen aus solchen Monomeren. Als Beispiele für Monomere, aus denen die Komponente (b) bestehen kann, werden genannt: Acrylsäure, Methacrylsäure, Styrol, $\alpha$-Alkylstyrol, Vinyltoluol, Acrylamid, Methacrylamid, N-Methylolacrylamid, N-Methylolmethacrylamid, Acrylnitril, Methacrylnitril, Ethacrylsäure und Ester der Ethacrylsäure, Crotonsäure und Ester der Crotonsäure, Acrylamidomethylpropansulfonsäure, Maleinsäure und Ester der Maleinsäure, Fumarsäure und Ester der Fumarsäure sowie Itakonsäure und Ester der Itakonsäure. Es ist bevorzugt, in der Komponente (b) kein Acrylamid und/oder Methacrylamid einzusetzen.

Die erfindungsgemäß eingesetzten Polyacrylatharze enthalten vorzugsweise Hydroxylgruppen und weisen vorzugsweise Hydroxylzahlen zwischen 2 und 100, besonders bevorzugt zwischen 10 und 60 auf.

Das zahlenmittlere Molekulargewicht (gelpermeationschromatographisch mit Polystyrolstandard bestimmt) der erfindungsgemäß eingesetzten Polyacrylatharze liegt im allgemeinen zwischen 1500 und 2.000,000, vorzugsweise zwischen 200.000 und 2.000.000, besonders bevorzugt zwischen 300.000 und 1.500.000.

Bevorzugt werden Polyacrylatharze eingesetzt, die durch Emulsionspolymerisation hergestellt worden sind. Ganz besonders bevorzugt werden Polyacrylatharze eingesetzt, die durch eine zweistufige Emulsionspolymerisation herstellbar sind, bei der

($\alpha$) in einer ersten Stufe 10 bis 90 Gew.-%, vorzugsweise 35 bis 65 Gew.-%, der insgesamt einzusetzenden Menge an Komponente (a), gegebenenfalls zusammen mit 0 bis 100 Gew.-% der insgesamt einzusetzenden Menge an Komponente (b) in wäßriger Phase in Gegenwart eines oder mehrerer Emulgatoren und eines oder mehrerer radikalbildender Initiatoren polymerisiert werden, wobei die in der ersten Stufe eingesetzten Monomere so ausgewählt werden, daß in der ersten Stufe ein Polymer mit einer Glasübergangstemperatur ($T_{G1}$) von + 30 bis + 110°C, vorzugsweise von + 60 bis + 95°C erhalten wird und

($\beta$) nachdem mindestens 80 Gew.-% der in der ersten Stufe eingesetzten Monomere umgesetzt worden sind, in einer zweiten Stufe 90 bis 10 Gew.-%, vorzugsweise 65 bis 35 Gew.-% der insgesamt einzusetzenden Menge an Komponente (a), gegebenenfalls zusammen mit 0 bis 100 Gew.-% der insgesamt einzusetzenden Menge an Komponente (b) in Gegenwart des in der ersten Stufe erhaltenen Polymers polymerisiert werden, wobei die in der zweiten Stufe eingesetzten Monomere so ausgewählt werden, daß eine alleinige Polymerisation der in der zweiten Stufe eingesetzten Monomere zu einem Polymer mit einer Glasübergangstemperatur ($T_{G2}$) von - 60 bis + 20°C, vorzugsweise - 50 bis 0°C, führen würde und wobei die Reaktionsbedingungen so gewählt werden, daß das erhaltene Polyacrylatharz ein zahlenmittleres Molekulargewicht von 200.000 bis 2.000.000, vorzugsweise 300.000 bis 1.500.000 aufweist und wobei die in der ersten und in der zweiten Stufe eingesetzten Monomere so ausgewählt werden, daß das erhaltene Polyacrylatharz eine Hydroxylzahl von 0 bis 100, vorzugsweise 10 bis 60 aufweist und die Differenz $T_{G1}$ - $T_{G2}$ 10 bis 170°C beträgt.

Zur Herstellung der bevorzugt eingesetzten, durch die oben beschriebene zweistufige Emulsionspolymerisation herstellbaren Polyacrylatharze wird die Komponente (a) in zwei Teile aufgeteilt. 10 bis 90 Gew.-% der insgesamt einzusetzenden Komponente (a) werden in der ersten Stufe und 90 bis 10 Gew.-% der insgesamt einzusetzenden Komponente (a) werden in der zweiten Stufe eingesetzt. Wenn zur Herstellung des Polyacrylatharzes auch noch die Komponente (b) eingesetzt wird, dann kann die Komponente (b) in der ersten Stufe, in der zweiten Stufe oder sowohl in der ersten als auch in der zweiten Stufe eingesetzt werden. Das erfindungsgemäß einzusetzende Furfurylacrylat und/oder Furfurylmethacrylat kann in der ersten Stufe, in der zweiten Stufe oder sowohl in der ersten als auch in der zweiten Stufe eingesetzt werden. Es wird vorzugsweise in der zweiten Stufe eingesetzt. Bei der Herstellung der bevorzugt eingesetzten, durch die oben beschriebene Emulsionspolymerisation herstellbaren Polyacrylatharze müssen die in der ersten Stufe eingesetzten Monomere in Art und Menge so ausgewählt werden, daß in der ersten Stufe ein Polymer mit einer Glasübergangstemperatur ($T_{G1}$) von + 30 bis + 110°C, vorzugsweise von +60 bis +95°C erhalten wird, die in der zweiten Stufe eingesetzten Monomere müssen in Art und Menge so ausgewählt werden, daß eine alleinige Polymerisation der in der zweiten Stufe eingesetzten Monomere zu einem Polymer mit einer Glasübergangstemperatur ($T_{G2}$) von - 60 bis + 20°C, vorzugsweise von -50 bis 0°C führen würde und die in der ersten und zweiten Stufe eingesetzten Monomere müssen in Art und Menge so ausgewählt werden, daß die Bedingung $T_{G1}$ - $T_{G2}$ = 10 bis 170°C, vorzugsweise 80 bis 150°C erfüllt wird.

Die Auswahl der in den beiden Stufen einzusetzenden Monomeren kann vom Fachmann leicht getroffen werden, weil die Glasübergangstemperatur von Polyacrylatharzen nach der Gleichung

$$\frac{1}{T_G} = \sum_{n=1}^{n=y} \frac{W_n}{T_{Gn}}$$

$T_G$ = Glasübergangstemp. des Copolymers in °K

$W_n$ = Gewichtsanteil des n-ten Monomers

$T_{Gn}$ = Glasübergangstemp. des Homopolymers aus dem n-ten Monomer

$x$ = Anzahl der verschiedenen Monomeren näherungsweise berechnet werden kann und weil die Hydroxylzahl der Polyacrylatharze durch die Menge an eingesetzten hydroxylgruppenhaltigen Monomeren gesteuert werden kann.

Dem Fachmann ist bekannt, wie er die Reaktionsbedingungen während der Emulsionspolymerisation zu wählen hat, damit er Polyacrylatharze erhält, die die oben angegebenen zahlenmittleren Molekulargewichte aufweisen (vgl. z.B. Chemie, Physik und Technologie der Kunststoffe in Einzeldarstellungen, Dispersionen synthetischer Hochpolymerer, Teil 1 von F. Hölscher, Springer Verlag, Berlin, Heidelberg, New York, 1969).

Es ist bevorzugt, in der ersten Stufe keine Monomeren einzusetzen, die Hydroxyl- und/oder Carboxylgruppen enthalten.

Die Herstellung von Polyacrylatharzen durch zweistufige Emulsionspolymerisation wird in der DE-A-38 41 540 auf Seite 2, Zeile 38 bis Seite 5, Zeile 7 sowie auf Seite 8, Zeile 35 bis Seite 10, Zeile 2 ausführlich beschrieben.

Die Basislacke können neben den oben beschriebenen Polyacrylatharzen noch weitere Bindemittelbestandteile, wie z.B. wasserverdünnbare Polyesterharze, wasserverdünnbare Polyacrylatharze, die nicht unter Verwendung von Furfurylacrylat und/oder Furfurylmethacrylat hergestellt worden sind, wasserverdünnbare Polyurethanharze, wasserverdünnbare Polyether usw. sowie Vernetzungsmittel, wie Aminoplastharze, insbesondere Melaminharze und blockierte Polyisocyanate enthalten. Beispiele für diese Bindemittelbestandteile und Vernetzungsmittel werden beispielsweise in der DE-A-38 41 540, EP-A-287 144, EP-A-38 127, DE-A-36 28 124, EP-A-195931 und EP-A-256 540 beschrieben.

Als Pigmente können die erfindungsgemäß eingesetzten Basislacke alle für wäßrige Lacke geeigneten anorganischen oder organischen Pigmente oder Mischungen aus solchen anorganischen und/oder organischen Pigmenten enthalten. Als Beispiele für einsetzbare Pigmente werden Titandioxid, Eisenoxid, Ruß, Metallpigmente, insbesondere Aluminiumpigmente und Perlglanz- bzw. Interferenzpigmente genannt. Die Basislacke enthalten vorzugsweise Metallpigmente, insbesondere Aluminiumpigmente allein oder in Kombination mit nichtmetallischen Pigmenten.

Die erfindungsgemäß eingesetzten Basislacke können im Prinzip mit allen für das Basecoat-Clearcoat-Verfahren geeigneten transparenten Decklacken (Klarlacken) überlackiert werden. Die transparenten Decklacke können konventionelle, d.h. ausschließlich organische Lösemittel enthaltende Lacke, wäßrige Lacke oder Pulverlacke sein.

Die Erfindung wird in den folgenden Beispielen näher erläutert. Alle Angaben über Teile und Prozentsätze sind Gewichtsangaben, falls nicht ausdrücklich etwas anderes festgestellt wird.

A) Herstellung einer wäßrigen Dispersion eines Polyacrylatharzes gemäß DE-A-38 41 540 (vgl. DE-A38 41 540, Seite 8, Emulsionspolymerdispersion 1)

In einem zylindrischen Glasdoppelwandgefäß mit Rührer, Rückflußkühler, rührbarem Zulaufgefäß, Tropftrichter und Thermometer werden 1344 g deionisiertes Wasser und 12 g einer 30 %igen wäßrigen Lösung des Ammoniumsalzes des Penta(ethylenglykol)-nonylphenylethersulfates (Fenopon® EP 110 der GAF Corp., Emulgator 1) vorgelegt und auf 82°C aufgeheizt. Im rührbaren Zulaufgefäß wird aus 720 g deionisiertem Wasser, 24 g Emulgator 1, 10,8 g Acrylamid, 864 g Methylmethacrylat und 216 g n-Butylmethacrylat eine Emulsion hergestellt. 30 Gew.-% dieser Emulsion werden zur Vorlage gegeben. Dann werden 28 Gew.-% einer Lösung von 3.1 g Ammoniumperoxodisulfat (APS) in 188 g deionisiertem Wasser innerhalb von 5 Minuten zugetropft. Es tritt eine exotherme Reaktion ein. Die Reaktionstemperatur wird zwischen 82 und 88°C gehalten. 15 Minuten nach Beendigung der Zugabe der Ammoniumperoxodisulfatlösung werden die restlichen 70 Gew.-% der Emulsion zusammen mit den restlichen 72 Gew.-% der Ammoniumperoxodisulfatlösung innerhalb einer Stunde zugegeben, wobei die Temperatur bei 85°C gehalten wird. Danach wird auf 82°C abgekühlt und innerhalb von 2 Stunden werden eine Mischung von 842 g n-Butylacrylat, 108 g Hydroxypropylmethacrylat, 43 g Methylmethacrylat, 43,2 g Methacrylsäure, 32,4 g Acrylamid und 5,4 g Eicosa(ethylenglykol)nonylphenylether (Antarox® CO 850 der GAF Corp., Emulgator 2) sowie 343 g deionisiertes Wasser zugegeben. Nach Beendigung der Zugaben wird die Reaktionsmischung noch für 1,5 Stunden bei 85°C gehalten. Danach wird abgekühlt und die Dispersion über ein Gewebe mit 30 µm Maschenweite gegeben. Man erhält eine feinteilige Dispersion mit einem nichtflüchtigen Anteil von 45 Gew.-%, einem pH-Wert von 3,4, einer Säurezahl von 13 und einer OH-Zahl von 20.

B) Herstellung einer wäßrigen Dispersion eines Polyacrylatharzes unter Verwendung von Furfurylmethacrylat

In einem zylindrischen Glasdoppelwandgefäß mit Rührer, Rückflußkühler, rührbarem Zulaufgefäß, Tropftrichter und Thermometer werden 1344 g deionisiertes Wasser und 12 g einer 30 %igen wäßrigen Lösung des Ammoniumsalzes des Penta(ethylenglykol)-nonylphenylethersulfates (Fenopon® EP 110 der GAF Corp., Emulgator 1) vorgelegt und auf 82°C aufgeheizt. Im rührbaren Zulaufgefäß wird aus 720 g deionisiertem Wasser, 24 g Emulgator 1, 10,8 g Acrylamid, 864 g Methylmethacrylat und 216 g n-Butylmethacrylat eine Emulsion hergestellt. 30 Gew.-% dieser Emulsion werden zur Vorlage gegeben. Dann werden 28 Gew.-% einer Lösung von 3,1 g Ammoniumperoxodisulfat (APS) in 188 g deionisiertem Wasser innerhalb von 5 Minuten zugetropft. Es tritt eine exotherme Reaktion ein. Die Reaktionstemperatur wird zwischen 82 und 88°C gehalten. 15 Minuten nach Beendigung der Zugabe der Ammoniumperoxodisulfatlösung werden die restlichen 70 Gew.-% der Emulsion zusammen mit den restlichen 72 Gew.-% der Ammoniumperoxodisulfatlösung innerhalb einer Stunde zugegeben, wobei die Temperatur bei 85°C gehalten wird. Danach wird auf 82°C abgekühlt und innerhalb von 2 Stunden werden eine Mischung von 792 g n-Butylacrylat, 108 g Hydroxypropylmethacrylat, 43 g Methylmethacrylat, 43,2 g Methacrylsäure, 32,4 g Acrylamid, 50 g Furfurylmethacrylat und 5,4 g Eicosa(ethylenglykol)nonylphenylether (Antarox® CO 850 der GAF Corp., Emulgator 2) sowie 343 g deionisiertes Wasser zugegeben. Nach Beendigung der Zugaben wird die Reaktionsmischung noch für 1,5 Stunden bei 85°C gehalten. Danach wird abgekühlt und die Dispersion über ein Gewebe mit 30 µm Maschenweite gegeben. Man erhält eine feinteilige Dispersion mit einem nichtflüchtigen Anteil von 45 Gew.-%, einem pH-Wert von 3,4, einer Säurezahl von 13 und einer OH-Zahl von 20. Dieses Polyacrylatharz unterscheidet sich von dem unter A) beschriebenen Polyacrylatharz lediglich dadurch, daß in der zweiten Stufe anstelle von 842 g n-Butylacrylat eine Mischung aus 792 g n-Butylacrylat und 50 g Furfurylmethacrylat (FMA, Röhm GmbH, CAS 3454-28-2) eingesetzt wird.

C) Herstellung eines wäßrigen Basislackes unter Verwendung des Polyacrylatharzes gemäß A)

16,4 g Butylglykol, 3,4 g eines handelsüblichen Melamin-Formaldehydharzes (Cymel® 301), 2,9 g Polypropylenglykol (zahlenmittleres Molekulargewicht = 420) und 6,6 g einer Aluminiumbronze gemäß DE-OS-36 36 183 (Aluminiumgehalt: 65 Gew.-%) werden mit einem Schnellrührer 15 Minuten (300 - 500 U/min.) lang gerührt. Es wird eine Mischung 1 erhalten.

33,5 g der gemäß A) hergestellten Polyacrylatharzdispersion werden mit 20,3 g deionisiertem Wasser vermischt und mit einer 5 %igen wäßrigen Dimethylethanolaminlösung auf einen pH-Wert von 7,7 eingestellt. Die Mischung wird 10 Minuten gerührt und anschließend mit 17,0 g einer 3,5 %igen Lösung eines handelsüblichen Polyacrylsäureverdickers (Viscalex® HV/30 der Allied Colloids, pH-Wert: 8,0) versetzt und weitere 10 Minuten gerührt. Es wird die Mischung 2 erhalten.

Die Mischungen 1 und 2 werden für 30 Minuten bei 800 - 1000 U/min. gemischt. Der so erhaltene Basislack wird mit einer 5 %igen wäßrigen Dimethylethanolaminlösung auf einen pH-Wert von 7,7 und mit deionisiertem Wasser auf einen Feststoffgehalt von 20 Gew.-% eingestellt.

D) Herstellung eines erfindungsgemäßen Basislackes

Es wird wie unter C) beschrieben verfahren. Anstelle der gemäß A) hergestellten Polyacrylatharzdispersion wird die gemäß B) hergestellte Polyacrylatdispersion eingesetzt.

E) Herstellung von Mehrschichtlackierungen

Die gemäß C) und D) hergestellten Basislacke werden auf bekannte Art und Weise auf mit einer handelsüblichen Elektrotauchlackierung und einem handelsüblichen Füller beschichtete phosphatierte Stahlbleche (Bonder 132) gespritzt, nach einer Ablüftzeit von 10 Minuten bei 80°C mit einem handelsüblichen Klarlack überlackiert und 20 Minuten bei 140°C eingebrannt. Für den Metalleffekt der mit dem gemäß C) hergestellten Basislack hergestellten Mehrschichtlackierung wird eine Maßzahl von 65 und für den Metalleffekt der mit dem gemäß D) hergestellten Basislack hergestellten Mehrschichtlackierung wird eine Maßzahl von 78 ermittelt. Mit dem erfindungsgemäßen Basislack können somit Mehrschichtlackierungen mit einem gegenüber dem Stand der Technik verbesserten Metalleffekt hergestellt werden.

Die Maßzahlen für den Metalleffekt werden wie folgt bestimmt:

1. Messung der spektralen Reflexion mittels Goniospektralphotometer Datacolor/Zeiss MCS 211/MMK 111 unter folgenden Meßgeometrien

| Geometrieklasse | Beleuchtung | Beobachtung |
|---|---|---|
| 25° | 45° | -20° |
| 70° | 45° | 25° |

2. Bestimmung der CIEL*a*b* 1976 Farbkoordinaten nach DIN 5033 und DIN 6174 für den 10° Normalbeobachter und Normlichtart $D_{65}$.

3. Bestimmung der Maßzahl für den Metalleffekt nach der Beziehung: Maßzahl $= ((L_{25°} - L_{70°}) \, 50) : L_{70°}$

**Patentansprüche**

1. Verfahren zur Herstellung eines mehrschichtigen schützenden und/oder dekorativen überzugs auf einer Substratoberfläche, bei dem

(1) ein pigmentierter wäßriger Basislack, der ein Polyacrylatharz als Bindemittel enthält, auf die Substratoberfläche aufgebracht wird, wobei das Polyacrylatharz erhältlich ist durch Polymerisation von (a) einer Mischung aus Estern der Methacrylsäure und/oder Estern der Acrylsäure, gegebenenfalls zusammen mit (b) weiteren, von (a) verschiedenen Monomeren oder Mischungen aus solchen Monomeren

(2) aus dem in Stufe (1) aufgebrachten Basislack ein Polymerfilm gebildet wird

(3) auf der so erhaltenen Basisschicht ein transparenter Decklack aufgebracht wird und anschließend

(4) Basisschicht und Deckschicht zusammen eingebrannt werden,

dadurch gekennzeichnet, daß das im pigmentierten wäßrigen Basislack enthaltene Polyacrylatharz erhältlich ist, indem als Komponente (a) eine Mischung aus Estern der Methacrylsäure und/oder Estern der Acrylsäure eingesetzt wird, die Furfurylacrylat und/oder Furfurylmethacrylat enthält.

2. Verfahren nach Anspruch 1, dadurch gekennzeichnet, daß die Komponente (a) Furfurylmethacrylat enthält.

3. Verfahren nach Anspruch 1 oder 2, dadurch gekennzeichnet, daß die Komponente (a) soviel Furfurylacrylat und/oder Furfurylmethacrylat enthält, daß der Anteil an Furfurylacrylat und/oder Furfurylmethacrylat, bezogen auf das Gesamtgewicht von (a) + (b) = 100 Gew.-%, 0,25 bis 10, vorzugsweise 1,0 bis 9,0, besonders bevorzugt 2,0 bis 7,0 Gew.-% beträgt.

4. Verfahren nach einem der Ansprüche 1 bis 3, dadurch gekennzeichnet, daß der pigmentierte wäßrige Basislack ein Metallpigment, vorzugsweise ein Aluminiumpigment oder eine Mischung aus Metallpigmenten enthält.

5. Verfahren nach einem der Ansprüche 1 bis 4, dadurch gekennzeichnet, daß der pigmentierte wäßrige Basislack ein Perlglanzpigment oder eine Mischung aus Perlglanzpigmenten enthält.

6. Wäßrige Lacke, die ein Polyacrylatharz als Bindemittel enthalten, wobei das Polyacrylatharz erhältlich ist durch Polymerisation von (a) einer Mischung aus Estern der Methacrylsäure und/oder Estern der Acrylsäure, die Furfurylacrylat und/oder Furfurylmethacrylat enthält, gegebenenfalls zusammen mit (b) weiteren, von (a) verschiedenen Monomeren oder Mischungen aus solchen Monomeren, dadurch gekennzeichnet, daß sie ein Metallpigment oder eine Mischung aus Metallpigmenten und/oder ein Perlglanzpigment oder eine Mischung aus Perlglanzpigmenten enthalten.

7. Wäßrige Lacke nach Anspruch 6, dadurch gekennzeichnet, daß sie ein Aluminiumpigment enthalten.

8. Wäßrige Lacke nach Anspruch 6 oder 7, dadurch gekennzeichnet, daß die Komponente (a) Furfurylmethacrylat enthält.

9. Wäßrige Lacke nach einem der Ansprüche 6 bis 8, dadurch gekennzeichnet, daß die Komponente (a) soviel Furfurylacrylat und/oder Furfurylmethacrylat enthält, daß der Anteil an Furfurylacrylat und/oder Furfurylmethacrylat, bezogen auf das Gesamtgewicht von (a) + (b) = 100 Gew.-%, 0,25 bis 10, vorzugsweise 1,0 bis 9,0, besonders bevorzugt 2,0 bis 7,0 Gew.-% beträgt.

## Claims

1. Process for the preparation of a multilayer protective and/or decorative coating on a substrate surface, in which

(1) a pigmented aqueous basecoat which contains a polyacrylate resin as binder is applied to the substrate surface, the polyacrylate resin being obtainable by polymerization of (a) a mixture of esters of methacrylic acid and/or esters of acrylic acid, together if required with (b) further monomers different from (a) or mixtures of such monomers,

(2) a polymer film is formed from the basecoat applied in stage (1),

(3) a transparent topcoat is applied to the resulting basecoat and subsequently

(4) basecoat and topcoat are baked together,

characterized in that the polyacrylate resin contained in the pigmented aqueous basecoat can be obtained by employing as component (a) a mixture of esters of methacrylic acid and/or esters of acrylic acid, which contains furfuryl acrylate and/or furfuryl methacrylate.

2. Process according to Claim 1, characterized in that component (a) contains furfuryl methacrylate.

3. Process according to Claim 1 or 2, characterized in that component (a) contains a quantity of furfuryl acrylate and/or furfuryl methacrylate such that the proportion of furfuryl acrylate and/or furfuryl methacrylate, based on the total weight of (a) + (b) = 100% by weight, is 0.25 to 10% by weight, preferably 1.0 to 9.0% by weight and particularly preferably 2.0 to 7.0% by weight.

4. Process according to one of Claims 1 to 3, characterized in that the pigmented aqueous basecoat contains a metallic pigment, preferably an aluminium pigment, or a mixture of metallic pigments.

5. Process according to one of Claims 1 to 4, characterized in that the pigmented aqueous basecoat contains a pearlescent pigment or a mixture of pearlescent pigments.

6. Aqueous paints which contain a polyacrylate resin as binder, the polyacrylate resin being obtainable by polymerization of (a) a mixture of esters of methacrylic acid and/or esters of acrylic acid, which contains furfuryl acrylate and/or furfuryl methacrylate, together if appropriate with (b) further monomers different from (a), or mixtures of such monomers, characterized in that they contain a metallic pigment or a mixture of metallic pigments and/or a pearlescent pigment or a mixture of pearlescent pigments.

7. Aqueous paints according to Claim 6, characterized in that they contain an aluminium pigment.

8. Aqueous paints according to Claim 6 or 7, characterized in that component (a) contains furfuryl methacrylate.

9. Aqueous paints according to one of Claims 6 to 8, characterized in that component (a) contains a quantity of furfuryl acrylate and/or furfuryl methacrylate such that the proportion of furfuryl acrylate and/or furfuryl methacrylate, based on the total weight of (a) + (b) = 100% by weight, is 0.25 to 10% by weight, preferably 1.0 to 9.0% by weight and particularly preferably 2.0 to 7.0% by weight.

**Revendications**

1. Procédé de préparation d'un revêtement multicouche protecteur et/ou décoratif sur une surface de substrat, lors duquel

   (1) l'on procède à l'application, sur la surface de substrat, d'une laque de base aqueuse pigmentée, qui contient une résine de polyacrylate en tant que liant, la résine de polyacrylate pouvant être obtenue grâce à une polymérisation (a) d'un mélange d'esters de l'acide méthacrylique et/ou d'esters de l'acide acrylique, le cas échéant conjointement avec (b) des monomères supplémentaires différents de (a) ou des mélanges de monomères de ce genre

   (2) l'on forme, à partir de la laque de base appliquée dans l'étape (1), un film polymère,

   (3) l'on procède à l'application, sur la couche de base ainsi obtenue, d'une laque de finition transparente et

   (4) l'on procède ensuite à la cuisson conjointe de la couche de base et de la couche de finition,

caractérisé en ce que l'on peut obtenir la résine de polyacrylate contenue dans la laque de base aqueuse pigmentée en utilisant en tant que composant (a) un mélange d'esters de l'acide méthacrylique et/ou d'esters de l'acide acrylique, qui contient de l'acrylate de furfuryle et/ou du méthacrylate de furfuryle.

2. Procédé selon la revendication 1, caractérisé en ce que le composant (a) contient du méthacrylate de furfuryle.

3. Procédé selon la revendication 1 ou 2, caractérisé en ce que le composant (a) contient de l'acrylate de furfuryle et/ou du méthacrylate de furfuryle dans une quantité telle que la proportion d'acrylate de furfuryle et/ou de méthacrylate de furfuryle, par rapport au poids total de (a) + (b) = 100 % en poids, est de 0,25 à 10, de préférence de 1,0 à 9,0, en particulier de préférence de 2,0 à 7,0 % en poids.

4. Procédé selon l'une quelconque des revendications 1 à 3, caractérisé en ce que la laque de base aqueuse pigmentée contient un pigment métallique, de préférence un pigment d'aluminium ou un mélange de pigments métalliques.

5. Procédé selon l'une quelconque des revendications 1 à 4, caractérisé en ce que la laque de base aqueuse pigmentée contient un pigment à lustre perlaire ou un mélange de pigments à lustre perlaire.

6. Laques aqueuses, qui contiennent une résine de polyacrylate en tant que liant, la résine de polyacrylate pouvant être obtenue par une polymérisation (a) d'un mélange d'esters de l'acide méthacrylique et/ou d'esters de l'acide acrylique, qui contient de l'acrylate de furfuryle et/ou du méthacrylate de furfuryle, le cas échéant, conjointement avec (b) des monomères supplémentaires différents de (a) ou des mélanges de monomères de ce genre, caractérisées en ce qu'elles contiennent un pigment métallique ou un mélange de pigments métalliques et/ou un pigment à lustre perlaire ou un mélange de pigments à lustre perlaire.

7. Laques aqueuses selon la revendication 6, caractérisées en ce qu'elles contiennent un pigment d'aluminium.

8. Laques aqueuses selon la revendication 6 ou 7, caractérisées en ce que le composant (a) contient du méthacrylate de furfuryle.

9. Laques aqueuses selon l'une quelconque des revendications 6 à 8, caractérisées en ce que le composant (a) contient de l'acrylate de furfuryle et/ou du méthacrylate de furfuryle dans une quantité telle que la proportion d'acrylate de furfuryle et/ou de méthacrylate de fùrfuryle, par rapport au poids total de (a) + (b) = 100 % en poids, est de 0,25 à 10, de préférence de 1,0 à 9,0, en particulier de préférence de 2,0 à 7,0 % en poids.